# EUROPÄISCHE PATENTSCHRIFT

(11) **EP 2 409 387 B1**
(45) Veröffentlichungstag und Bekanntmachung des Hinweises auf die Patenterteilung: **26.06.2013**
(21) Anmeldenummer: 10707285.2
(22) Anmeldetag: 09.03.2010
(51) Int. Cl.: H02K 5/18, H02K 1/14

(54) **STATOR FÜR EINE ELEKTRODYNAMISCHE MASCHINE**
STATOR FOR AN ELECTRODYNAMIC MACHINE
STATOR POUR UNE MACHINE ÉLECTRODYNAMIQUE

(30) Priorität: 17.03.2009 DE 102009001588
(43) Veröffentlichungstag der Anmeldung: 25.01.2012
(73) Patentinhaber: HILTI Aktiengesellschaft, 9494 Schaan (LI)
(72) Erfinder: PRITZEN, Thomas, 86199 Inningen (DE); RIEDL, Reinhard, 86923 Finning (DE); SCHÄFER, Thomas, 86836 Obermeitingen (DE); BRAML, Georg, 86899 Landsberg (DE)
(74) Vertreter: Söllner, Oliver
(86) Internationale Anmeldenummer: PCT/EP2010/052933
(87) Internationale Veröffentlichungsnummer: WO 2010/105936

(56) Entgegenhaltungen:
- EP-A2- 0 952 658
- DE-A1- 19 629 383
- DE-C- 746 360
- GB-A- 2 430 085
- JP-A- 3 117 358
- US-A1- 2003 057 797

## Beschreibung

### GEBIET DER ERFINDUNG

Die vorliegende Erfindung betrifft einen Stator für eine elektrodynamische Maschine, insbesondere einen Elektromotor, wie aus der DE 746 360 C und aus dem Oberbegriff des Anspruchs 1 bekannt.

### BESCHREIBUNG DES STANDES DER TECHNIK

Aus US 6,573,632 B2 ist ein Stator für einen Elektromotor bekannt. Ein strukturell tragendes Element wird durch einen geschlossenen Rückschlussring gebildet. Mehrere Statorzähne sind an einer Innenseite des Rückschlussrings angeordnet. Eine Befestigung der Statorzähne an dem Rückschlussring erfolgt über axial verlaufende Nuten in Rückschlussring und formschlüssige Vorsprünge an den Statorzähnen.

Eine Ursache für Leistungsverluste eines Elektromotors sind Wirbelströme in dem Rückschlussring. Die US 6,573,632 B2 setzt daher den Rückschlussring aus einzelnen Blechen zusammen, die einen Stromfluss quer zu ihnen aufgrund des erhöhten Widerstands verringern. Durch das Einsetzen der Statorzähne in die Nuten kann sich jedoch eine elektrische Verbindung zwischen den einzelnen Blechen ergeben.

### OFFENBARUNG DER ERFINDUNG

Eine Aufgabe besteht darin ein Stator mit verringerten Wirbelstromverlusten zu schaffen.

Der erfindungsgemäße Stator für eine elektrodynamische Maschine beinhaltet einen Rückschlussring, der wenigstens eine axial verlaufende Nut aufweist, und wenigstens einen Statorzahn, der formschlüssig in der axial verlaufenden Nut verankert ist. Die axial verlaufende Nut ist in wenigstens einem Abschnitt zu einem Schlitz ausgebildet.

Eine Nut bezeichnet in diesem Zusammenhang eine Vertiefung in dem Rückschlussring, die einen Boden aufweist. Die Tiefe der Nut ist geringer als die Wandstärke des Ruckschlussrings in diesem Bereich. Ein Schlitz ist ebenfalls eine Vertiefung im Gegensatz zu der Nut jedoch ohne den Boden.

Eine parasitäre elektrische Verbindung in axialer Richtung ist auf ein Segment zwischen zwei Schlitzen beschränkt. Hierdurch können Wirbelströme verringert werden und die Effizienz einer elektrodynamischen Maschine gesteigert werden.

Der Statorzahn weist einen Verankerungsabschnitt auf, der den Schlitz durchgreift. Eine Befestigung des Statorzahns erfolgt außerhalb des Schlitzes oder der Nut. Der Verankerungsabschnitt weist eine erste Anlagefläche an einer Innenseite des Rückschlussrings und an zweite Anlagefläche an einer Außenseite des Rückschlussrings auf. Im Gegensatz zu einer Befestigung in einer Nut kann auf einen mechanischen Schluss innerhalb des Schlitzes verzichtet werden. Isolationselemente können zwischen dem Rückschlussring und den Anlageflächen vorgesehen werden.

Es ist vorgesehen, dass der Verankerungsabschnitt einen Steg aufweist, dessen Breite geringer als eine Breite des Schlitzes ist. Der Steg kann seitlich von dem Rückschlussring beabstandet sein, z.B. durch Luftschlitze. Eine axiale elektrische Verbindung kann somit vermieden werden.

Die zweite Anlagefläche ist von einem Rand des Schlitzes beabstandet. Beispielsweise ist die zweite Anlagefläche durch einen Kopfabschnitt gebildet, der auf einer Höhe der zweiten Anlagefläche eine an den Schlitz angrenzende und axial verlaufende Kerbe aufweist. Ein Berühren der Kanten im Bereich des Schlitzes wird vermieden. Diese Bereiche sind besonders anfällig für eine Beschädigung einer Isolation und folglich eine Quelle für unerwünschte axiale elektrische Verbindungen.

In den Unteransprüchen sind Ausgestaltungen des erfindungsgemäßen Stators angegeben.

Eine Ausgestaltung sieht vor, dass eine axiale Abmessung des Verankerungsabschnitts und eine axiale Abmessung des Schlitzes gleich sind. Der Statorzahn kann über die gesamte Länge des Schlitzes mittels eines Hintergriffs befestigt werden.

Eine axiale Abmessung des Schlitzes kann wenigstens ein Drittel einer axialen Abmessung des Rückschlussrings betragen, beispielsweise mehr als die Hälfte oder mehr als drei Viertel. Der Schlitz kann an einem axialen Ende des Rückschlussrings beginnen. Ein weiterer Schlitz kann von dem gleichen oder dem gegenüberliegende axialen Ende des Rückschlussrings beginnen.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Querschnitt durch einen Elektromotor;
Fig. 2 eine perspektivische Ansicht eines Rückschlussrings des Elektromotors;
Fig. 3 einen Querschnitt durch den Rückschlussring;
Fig. 4 einen Längsschnitt durch den Rückschlussring;
Fig. 5 eine perspektivische Ansicht eines Statorzahns des Elektromotors;
Fig. 6 einen Querschnitt durch den Statorzahn und
Fig. 7 eine Seitenansicht des Statorzahns.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

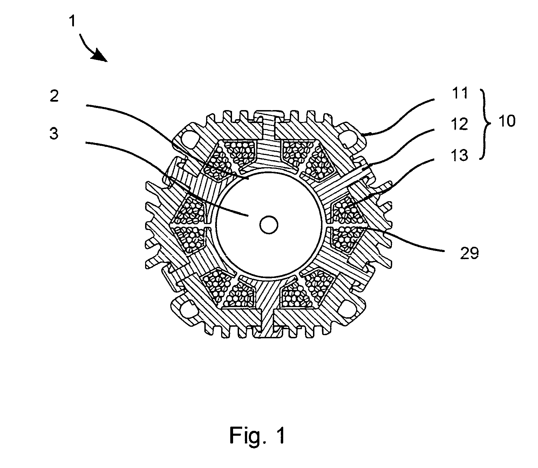

Eine Ausführungsform eines Stators wird unter Bezug auf die Figuren 1 bis 7 beschrieben. Der beispielhafte Stator 10 kann für einen Elektromotor 1 oder eine andere elektrodynamische Maschine, z.B. einen Generator, verwendet werden. Der Elektromotor kann ein Universalmotor oder ein bürstenloser Elektromotor sein. Ein Rotor 2 und eine Welle 3 des Elektromotors 1 sind schematisch angedeutet. Der Rotor 2 weist wenigstens zwei Pole auf, die durch Spulenwicklungen oder durch Permanentmagnete gebildet werden können.

Der Stator 10 beinhaltet einen Rückschlussring 11, Statorzähne 12 und Wicklungen 13. Um jeden der Statorzähne 12 ist eine der Wicklungen 13 gelegt. Die Anzahl der Statorzähne 12 und damit die Anzahl der Pole des Stators 10 können wie in dem dargestellten Beispiel sechs sein. Es kann jedoch auch eine andere Anzahl, je nach Einsatzgebiet der elektrodynamischen Maschine und der Anzahl der Pole des Rotors 2.

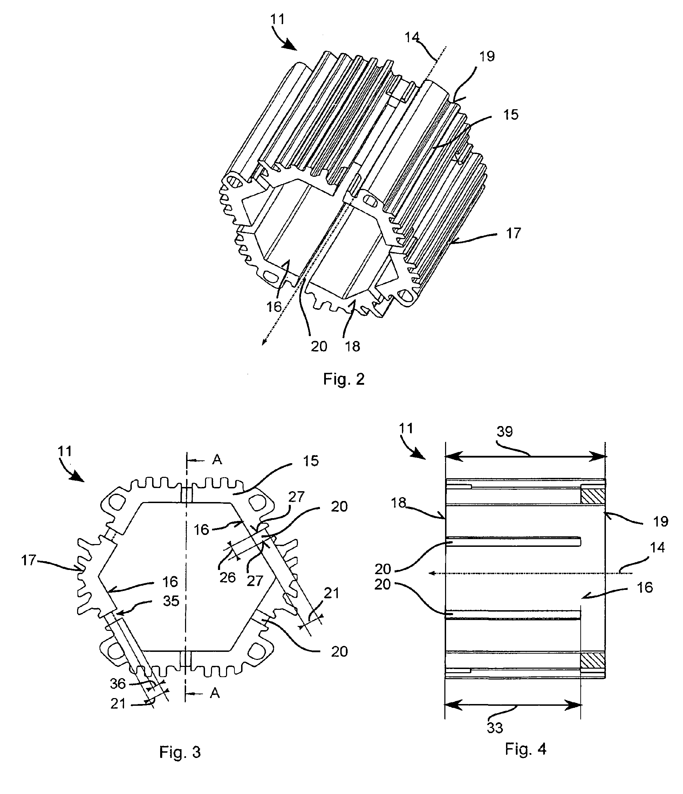

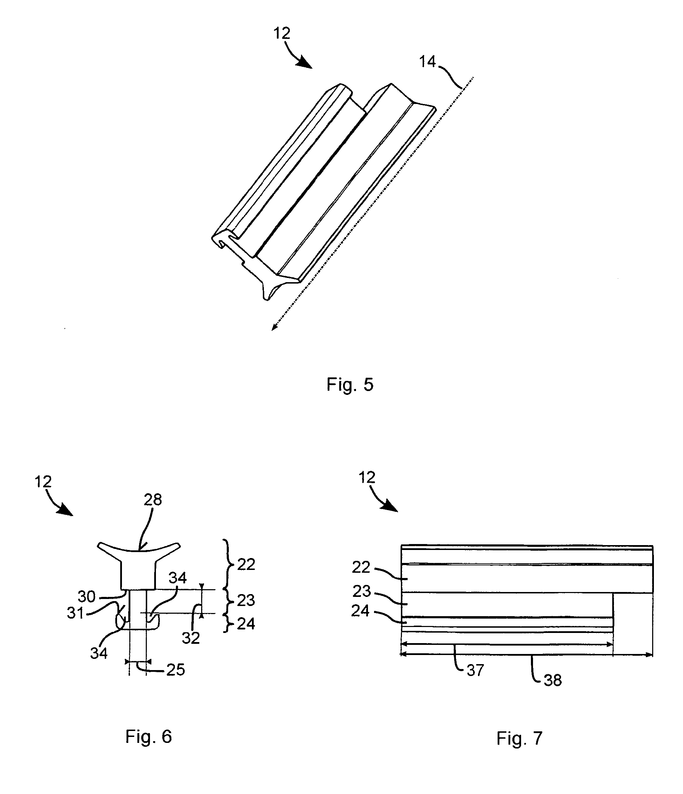

Ein beispielhafter Aufbau des Rückschlussrings 11 ist perspektivisch in Fig. 2 dargestellt. Fig. 5 zeigt einen Querschnitt des Rückschlussrings 11 senkrecht zu einer Längsachse 14. Fig. 6 zeigt einen Längsschnitt entlang der in Fig. 5 angegebenen Ebene A-A. Der Rückschlussring 11 ist ein zusammenhängender Hohlkörper, gebildet durch eine Wand 15 mit einer Innenfläche 16, einer Außenfläche 17 und zwei einander gegenüberliegenden Stirnflächen 18, 19.

In die Wand 15 sind mehrere Schlitze 20 eingebracht. Die Schlitze 20 verlaufen axial, das heißt parallel zu der Längsachse 14. Im Bereich der Schlitze 20 ist die Wand 15 vollständig entfernt. Seitenwände 27 der Schlitze 20 können im Wesentlichen senkrecht zu der Innenfläche 16 verlaufen. Die Länge 33 der Schlitze 20, bestimmt parallel zur Längsachse 14, kann größer als die Hälfte der Länge 39 des Rückschlussrings 11 sein. Alternativ beträgt die Länge 33 der Schlitze 20 wenigstens zwei Drittel oder wenigstens drei Viertel der Länge 39 des Rückschlussrings 11. Die Schlitze 20 können unterschiedlich lang sein. Die Länge des Schlitzes 20 ist vorzugsweise kürzer als 90%, z.B. 75% der Länge 39 des Rückschlussrings, um eine ausreichende mechanische Stabilität zu gewährleisten.

In axialer Verlängerung kann sich eine Nut 35 in der Wand 15 an die Schlitze 20 anschließen (beispielhaft dargestellt in der rechten Hälfte von Fig. 3). Die Nut 35 kann an der Innenfläche 16 verlaufen. Die Tiefe 36 der Nut 35 ist geringer als eine Wandstärke 21 der Wand 15.

Die Schlitze 20 beginnen in der dargestellten Ausführungsform alle bei der ersten Stirnfläche 18. Alternativ kann eine erste Gruppe der Schlitze 20 bei der ersten Stirnflächen 18 und eine zweite Gruppe der Schlitze bei der zweiten Stirnflächen 19 beginnen. Die Schlitze 20 können in gleichen Abständen entlang des Umfangs des Rückschlussrings 11 angeordnet sein. In anderen Ausführungsformen können zwei Schlitze 20 paarweise einen geringeren Abstand zueinander als zwischen zwei Paaren der Schlitze 20 aufweisen.

Der Rückschlussring 11 kann vollständig mit einer Isolationsschicht, z.B. einem Lack, umgeben sein. Die Isolationsschicht kann auch partiell auf wenigstens einem erfolgenden Flächen aufgebracht werden: den Seitenflächen 27 der Schlitze 20, der Innenfläche 16, der Außenfläche 17.

Der Rückschlussring 11 ist vorzugsweise geblecht, indem mehrere Bleche mit einer Kontur entsprechend dem Querschnitt des Rückschlussrings 11 auf einander gestapelt sind.
Ein Statorzahn 12 ist perspektivisch in Fig. 5, in einem Querschnitt senkrecht zur Längsachse 14 in Fig. 6 und in einer Seitenansicht in Fig. 7 dargestellt. Der Statorzahn 12 weist einen Steg 23 auf, an dessen einer Seite sich ein Polabschnitt 22 und an einer gegenüberliegenden Seite ein Kopfabschnitt 24 anschließt. Die Höhe 32 des Stegs 23 ist gleich der Wandstärke 21 der Wand 15 im Bereich des Schlitzes 20 gewählt. Der Kopfabschnitt 24 und der Polabschnitt 22 können den Statorzahn 12 formschlüssig mittels eines Umgreifens der Wand 15 durch den Schlitz 20 hindurch befestigen.

Der Statorzahn 12 wird längs in einen der Schlitze 20 des Rückschlussrings 11 eingesetzt, wobei der axial verlaufende Steg 23 in dem Schlitz 20 liegt. Der Steg 23 weist dafür eine Breite 25 auf, die geringer als eine Breite 26 des Schlitzes 20 ist. Vorzugsweise berührt der Steg 23 nicht die Seitenwände 27 des Schlitzes 20. Zwischen dem Steg 23 und dem Schlitz 20 kann ein Luftspalt vorgesehen sein, alternativ ist eine Isolationsschicht aus einem nicht leitenden Kunststoff auf den Seitenwänden 27 vorgesehen.

Der Polabschnitt 22 kann eine Spulenwicklung 13 in dem Stator 10 fixieren. Eine von dem Steg 23 abgewandte Fläche 28 des Polabschnitts 22 kann beispielsweise derart dimensioniert sein, dass sich die abgewandten Flächen 28 zweier benachbarter Statorzähne 12 in dem Stator 10 berühren oder durch einen schmalen Spalt 29 voneinander getrennt sind.

Ein Sockel 30 des Polabschnitts 22 ist breiter als der Steg 23 und der Schlitz 20. Der Sockel 30 liegt unmittelbar oder durch eine Isolationsschicht getrennt an der Innenfläche 16 des Rückschlussrings 11 an, wenn der Statorzahn 12 in den Schlitz 20 eingesetzt wird.

Der Kopfabschnitt 24 ist breiter als der Steg 23 und der Schlitz 20. Der Kopfabschnitt 24 weist eine Anlagefläche 31 auf, die die Außenfläche 17 des Rückschlussrings 11 berührt. Zwischen der Anlagefläche 31 und den Rückschlussring 11 kann eine Isolationsschicht vorgesehen sein.

Der Kopfabschnitt 24 kann an einer dem Steg 23 zugewandten Fläche 33 längs verlaufende Kerben 34 aufweisen, die an den Steg 23 angrenzen. Die Anlagefläche 31 ist hierdurch in axialer Richtung von dem Schlitz 20 beanstandet.

Eine Länge 37 des Stegs 23 ist vorzugsweise an die Länge 33 der Schlitze 20 angepasst, z.B. sind die beiden Längen 33, 37 gleichgroß. Der Polabschnitt 22 (Länge 38) kann länger als der Steg 23 sein. Der Polabschnitt 22 kann sich über die gesamte Länge 39 des Rückschlussrings 11 und damit der Stators 10 erstrecken. Eine Länge des Kopfabschnitts 24 kann gleich der Länge 37 des Stegs 23 (dargestellt) oder gleich der Länge 38 des Polabschnitts (nicht dargestellt) gewählt werden.

In den dargestellten Ausführungsformen beginnen die Schlitze 20 an einer Stirnfläche 18. Dies ermöglicht in einfacher Weise die Statorzähne 12 an dem Rückschlussring 11 zu befestigen. Die Spulenwicklungen 13 können um den Polabschnitt 22 der Statorzähne 13 gewickelt werden, bevor die Statorzähne 12 in den Rückschlussring 11 eingesetzt werden.

In einer Ausführungsform können die Schlitze 20 zu beiden Stirnflächen 18, 19 hin geschlossen sein. Der Rückschlussring 11 kann dazu beispielsweise aus zwei Teilringen zusammengesetzt werden. Bei wenigstens einem der beiden Teilringe sind die Schlitze 20 an einer Stirnfläche offen. Die Statorzähne 12 können in diesen Teilring eingesetzt werden und wird auf den zweiten Teilring aufgesetzt.

## Patentansprüche

1. Stator (10) für eine elektrodynamische Maschine mit
einem Rückschlussring (11), der wenigstens eine axial verlaufende Nut aufweist, wenigstens einen Statorzahn (12), der formschlüssig in der axial verlaufenden Nut verankert ist,
wobei die axial verlaufende Nut in wenigstens einem Abschnitt zu einem Schlitz (20) ausgebildet ist,
wobei der Statorzahn (12) einen Verankerungsabschnitt (23, 24) aufweist, der den Schlitz (20) durchgreift,
wobei der Verankerungsabschnitt (23, 24) eine erste Anlagefläche (30) an einer Innenseite (16) des Rückschlussrings (11) und eine zweite Anlagefläche (31) an einer Außenseite (17) des Rückschlussrings (11) aufweist,
wobei der Verankerungsabschnitt (23, 24) einen Steg aufweist, dessen Breite (25) geringer als eine Breite (26) des Schlitzes (20) ist,
**dadurch gekennzeichnet, dass** die zweite Anlagefläche (31) von einem Rand des Schlitzes (20) beabstandet ist.

2. Stator (10) nach Anspruch 1, **dadurch gekennzeichnet, dass** eine Abmessung (32) des Stegs (23) senkrecht zu dem Rückschlussring (11) im Bereich des Schlitzes (20) gleich einer Wandstärke (25) des Rückschlussrings (11) im Bereich des Schlitzes (20) ist.

3. Stator (10) nach einem der Ansprüche 1 oder 2, **dadurch gekennzeichnet, dass** eine axiale Abmessung (37) des Verankerungsabschnitts (23, 24) und eine axiale Abmessung (33) des Schlitzes (20) gleich sind.

4. Stator (10) nach Anspruch 1, **dadurch gekennzeichnet, dass** die zweite Anlagefläche (31) durch einen Kopfabschnitt (24) gebildet ist, der auf einer Höhe der zweiten Anlagefläche (31) eine an den Schlitz (20) angrenzende und axial verlaufende Kerbe (34) aufweist.

5. Stator (10) nach einem der vorhergehenden Ansprüche, **dadurch gekennzeichnet, dass** eine axiale Abmessung (33) des Schlitzes (20) wenigstens ein Drittel einer axialen Abmessung (39) des Rückschlussrings (11) beträgt.

6. Stator (10) nach einem der vorhergehenden Ansprüche, **dadurch gekennzeichnet, dass** der Schlitz (20) an einem axialen Ende (18, 19) des Rückschlussrings (11) beginnt.

7. Stator (10) nach Anspruch 6, **dadurch gekennzeichnet, dass** wenigstens zwei Schlitze (20) vorgesehen sind, die an gegenüberliegenden axialen Enden (18, 19) des Schlitzes (20) beginnen.

8. Stator (10) nach Anspruch 7, **dadurch gekennzeichnet, dass** die zwei Schlitze (20) um einen Winkel zueinander versetzt angeordnet sind.

9. Stator (10) nach einem der vorhergehenden Ansprüche, **dadurch gekennzeichnet, dass** zwei Rückschlussringe (11) vorgesehen sind, die jeweils wenigstens einen Schlitz (20) beginnend an einem axialen Ende (18, 19) aufweisen, und die beiden Rückschlussringe (11) derart zueinander orientiert sind, dass die beiden Schlitze (20) ineinander übergehen.

10. Stator (10) nach einem der vorhergehenden Ansprüche, **dadurch gekennzeichnet, dass** der Rückschlussring (11) an einer Außenseite (17) Kühlrippen aufweist.

11. Elektrodynamische Maschine **gekennzeichnet durch** einen Stator (10) nach einem der vorhergehenden Ansprüche.

## Claims

1. A stator (10) for an electrodynamic machine, with a return ring (11), having at least one axial groove,
and at least one stator tooth (12) anchored with positive fit in said axial groove, at least one portion of the axial groove taking the form of a slot (20),
the stator tooth (12) having an anchoring portion (23, 24) which extends through the slot (20),
the anchoring portion (23, 24) having a first contact surface (30) on an inner side (16) of the return ring (11) and a second contact surface (31) on an outer side (17) of the return ring (11),
the anchoring portion (23, 24) having a web, the width (25) of which is less than a width (26) of the slot (20),
**characterized in that** the second contact surface (31) is at a distance from one edge of the slot (20).

2. A stator (10) according to Claim 1, **characterized in that** a measurement (32) of the web (23) perpendicular to the return ring (11) in the region of the slot (20) is equal to a wall thickness (25) of the return ring (11) in the region of the slot (20).

3. A stator (10) according to one of Claims 1 or 2, **characterized in that** an axial measurement (37) of the anchoring portion (23, 24) and an axial measurement (33) of the slot (20) are equal.

4. A stator (10) according to Claim 1, **characterized in that** the second contact surface (31) is formed by a head portion (24), which, at the level of the second contact surface (31), has a notch (34) adjacent to the slot (20) and extending in axial direction.

5. A stator (10) according to one of the preceding claims, **characterized in that** an axial measurement (33) of the slot (20) amounts to at least one third of an axial measurement (39) of the return ring (11).

6. A stator (10) according to one of the preceding claims, **characterized in that** the slot (20) starts at one axial end (18, 19) of the return ring (11).

7. A stator (10) according to Claim 6, **characterized in that** at least two slots (20) are provided, which start at opposite axial ends (18, 19) of the slot (20).

8. A stator (10) according to Claim 7, **characterized in that** the two slots (20) are offset at an angle to one another.

9. A stator (10) according to one of the preceding claims, **characterized in that** two return rings (11) are provided, each having at least one slot (20) starting at one axial end (18, 19), and the two return rings (11) are oriented relative to one another in such a way that the two slots (20) merge into one another.

10. A stator (10) according to one of the preceding claims, **characterized in that** the return ring (11) has cooling ribs on an outer side (17).

11. An electrodynamic machine **characterized by** a stator (10) according to one of the preceding claims.

## Revendications

1. Stator (10) pour une machine électrodynamique comportant :
une couronne de reflux (11) comportant au moins une gorge s'étendant axialement,
au moins une dent de stator (12) ancrée par complémentarité de formes dans la gorge s'étendant axialement,
dans lequel la gorge s'étendant axialement est formée en au moins une partie jusqu'à une fente (20),
dans lequel la dent de stator (12) comporte une partie d'ancrage (23, 24) qui traverse la fente (20),
dans lequel la partie d'ancrage (23, 24) comporte une première surface de contact (30) sur un côté intérieur (16) de la couronne de reflux (11) et une seconde surface de contact (31) sur un côté extérieur (17) de la couronne de reflux (11),
dans lequel la partie d'ancrage (23, 24) comporte un gradin dont la largeur (25) est plus petite qu'une largeur (26) de la fente (20),
**caractérisé en ce que** la seconde surface de contact (31) est espacée d'un bord de la fente (20).

2. Stator (10) selon la revendication 1, **caractérisé en ce qu'**une dimension (32) du gradin (23) perpendiculairement à la couronne de reflux (11) dans la zone de la fente (20) est égale à une épaisseur de paroi (25) de la couronne de reflux (11) dans la zone de la fente (20) .

3. Stator (10) selon l'une quelconque des revendications 1 ou 2, **caractérisé en ce qu'**une dimension axiale (37) de la partie d'ancrage (23, 24) et une dimension axiale (33) de la fente (20) sont identiques.

4. Stator (10) selon la revendication 1, **caractérisé en ce que** la seconde surface de contact (31) est formée par une partie de tête (24) qui comporte, à hauteur de la seconde surface de contact (31), une entaille (34) s'étendant axialement et bordant la fente (20).

5. Stator (10) selon l'une quelconque des revendications précédentes, **caractérisé en ce qu'**une dimension axiale (33) de la fente (20) est au moins égale à un tiers d'une dimension axiale (39) de la couronne de reflux (11) .

6. Stator (10) selon l'une quelconque des revendications précédentes, **caractérisé en ce que** la fente (20) débute à une extrémité axiale (18, 19) de la couronne de reflux (11).

7. Stator (10) selon la revendication 6, **caractérisé en ce que** sont prévues au moins deux fentes (20) qui débutent sur des extrémités axiales opposées (18, 19) de la fente (20).

8. Stator (10) selon la revendication 7, **caractérisé en ce que** les deux fentes (20) sont agencées décalées d'un certain angle l'une par rapport à l'autre.

9. Stator (10) selon l'une quelconque des revendications précédentes, **caractérisé en ce que** sont prévues deux couronnes de reflux (11) qui comportent respectivement au moins une fente (20) débutant à une extrémité axiale (18, 19), et les deux couronnes de reflux (11) sont orientées l'une par rapport à l'autre de telle sorte que les deux fentes (20) se confondent l'une l'autre.

10. Stator (10) selon l'une quelconque des revendications précédentes, **caractérisé en ce que** la couronne de reflux (11) comporte des nervures de refroidissement sur un côté extérieur (17).

11. Machine électrodynamique **caractérisée par** un stator (10) selon l'une des revendications précédentes.
